# EUROPEAN PATENT APPLICATION

(11) **EP 4 184 194 A1**
(43) Date of publication of application: **24.05.2023**
(21) Application number: 21209948.5
(22) Date of filing: 23.11.2021
(51) Int. Cl.: G01S 5/04, H04W 4/029, G01S 5/00, G01S 5/14

(54) **FIRST DEVICE, SECOND DEVICE, THIRD DEVICE, RESPECTIVELY IN A POSITIONING SYSTEM, POSITIONING SYSTEM AND METHOD**

(71) Applicant: u-blox AG, 8800 Thalwil (CH)
(72) Inventor: RUMAR, Tove, 8800 Thalwil (CH); JUELSSON LARSEN, Ludvig, 8800 Thalwil (CH); KARLSON, Peter, 8800 Thalwil (CH)
(74) Representative: Epping - Hermann - Fischer

(57) **Abstract**

In one embodiment a first device (10) in a positioning system (40) is defined. The first device (10) is configured to detect whether the first device (10) is moving or stationary, and to periodically send a first signal to a second device (20) in the positioning system (40) as long as the first device (10) is not stationary, the first signal comprising at least localization enabling information. When detecting that the first device (10) is stationary, the first device (10) is further configured to send a second signal to the second device (20), the second signal indicating that the first device (10) is stationary, and to stop sending the first signal.

## Description

The present disclosure relates to the field of positioning. Specifically, the disclosure is directed to a first device in a positioning system, a second device in a positioning system, a third device in a positioning system, a positioning system and a method.

A positioning system is often employed for determining the position of an object or device in space. Diverse technologies for this task exist for realizing different coverage ranges. Some technologies enable worldwide coverage with meter accuracy, other technologies enable workspace coverage with sub-millimeter accuracy.

Short range radio standards, e.g. Bluetooth, Bluetooth Low Energy, BLE, Ultra-Wideband, UWB, Wireless LAN, WLAN, are also used for determining the position or location of an object. For example, BLE devices called tags periodically transmit information which enables their localization, called continuous tone extension, CTE, towards anchor points where direction finding by means of calculating the Angle-of-Arrival, AoA, is performed. This is based on requests and/or continuous transmission. Calculated angles are provided to a central positioning engine. The positioning engine receives calculated angles from various anchor points and performs tasks like pre-processing and selection of anchor points for each tag; determining the position of a tag is effected using one or more of the following: a least square 3D algorithm based on the angles, received signal strength indication, RSSI, and/or distance; machine learning estimation based on angles, RSSI and/or distance; dead reckoning algorithm using accelerometer and gyro data; final Kalman filtering of the three inputs, i.e. angles, RSSI and/or distance.

Nowadays tags are increasingly enabled to detect whether they are stationary or moving. However, a tag keeps sending CTEs and an anchor point listens for and receives CTEs of all tags in its range more or less simultaneously, regardless of whether a tag is moving, i.e. changing its position or location, or remaining stationary, i.e. keeping a fixed position. An anchor point's compute resource is typically limited by receiving and decoding CTEs from a large number of tags in the system. A positioning engine also keeps track of a large number of tags using the information provided by the anchor points, even if tags are not moving. This leads to a waste of resources in tags, anchor points and positioning engine.

An objective could therefore be seen in providing a solution which overcomes the above shortcomings of existing implementations.

The objective is achieved by the subject-matter of the independent claims. Embodiments and developments are defined in the dependent claims.

The definitions provided above also apply to the following description unless stated otherwise.

In one embodiment a first device in a positioning system is defined. The first device is configured to detect whether the first device is moving or stationary. The first device is further configured to periodically send a first signal to a second device in the positioning system as long as the first device is not stationary. The first signal comprises at least localization enabling information. Upon detection that the first device is stationary, the first device is further configured to send a second signal to the second device. The second signal indicates that the first device is stationary. Then the first device is configured to stop sending the first signal.

As long as the first device is moving, i.e. not stationary, it periodically sends the first signal comprising at least localization enabling information to the second device in the positioning system. When the device detects that it is no longer moving, i.e. it is stationary, the first device sends the second signal to the second device, such that the second device is informed that the first device is stationary. The first device than stops sending the first signal.

By refraining from sending the first signal to the second device, the first device abstains from providing the same localization enabling information again and again to the second device in case the first device is stationary. Resources like power are consequently saved in the first device as long as it is stationary.

Within the positioning system a position of the first device is determined. In other words, the localization enabling information provided with at least the first signal allows the positioning system to determine the location of the first device.

In a development the first device comprises a sensor, a first device processing unit and a first device radio frequency, RF transceiver. The sensor is configured to detect a movement of the first device and accordingly provide movement information. The first device processing unit is configured to provide at least one data packet comprising the localization enabling information and a flag bit. The flag bit is indicative of the first devices movement detected by the sensor. The first device RF transceiver implements transmission according to a short range radio standard. The first device RF transceiver is configured to receive the at least one data packet from the first device processing unit and therefrom provide the first or the second signal.

The sensor which may also be called a motion sensor detects the movement of the first device and provides corresponding movement information to the first device processing unit. The processing unit constructs at least one data packet with the localization enabling information and the flag bit which corresponds to the movement information. The RF transceiver provides the first or the second signal using the at least one data packet and transmits said first or second signal using a short range radio standard.

Examples of the short range radio standard include but are not limited to Bluetooth, Bluetooth Low Energy, BLE, Ultra-Wideband, UWB, wireless LAN, WLAN, or Zigbee. In case of BLE, for example, BLE 5.1, the data packet comprises a so-called packet data unit, PDU, and a continuous tone extension, CTE, which represents the localization enabling information. In this case, the flag bit is comprised by or embedded in the PDU. The RF transceiver generates the first or the second signal from the data packet, depending on the value of the flag bit.

The first device may also be referred to as a tag.

According to a development the first device processing unit is configured to set the flag bit according to the movement information provided by the sensor.

By setting the flag bit according to the movement information, the flag bit indicates whether the first device is stationary or moving.

In an exemplary implementation the flag bit may be set to one as soon as it is detected by the sensor that the first device is no longer moving, thereby indicating that the first device is stationary, when the flag bit is set to one.

In a development the sensor comprises an inertial measurement unit, IMU. In particular the sensor comprises at least one of the following: a gyro-sensor, or an accelerometer, or a compass or a magnetometer.

The data packet also comprises identification, ID, information of the first device. It may additionally comprise IMU data, security information, and a medium access control, MAC, addresse of the first device.

In an embodiment a second device in a positioning system is defined. The second device is configured to receive at least one first and at least one second signal from a first device in the positioning system. Each first signal comprises at least a localization enabling information. Each second signal indicates that the first device is stationary. The second device is further configured to upon reception of each first signal extract the localization enabling information and optionally calculate at least a direction of said first signal from the localization enabling information and send the localization enabling information or at least the calculated direction together with identification information of the first device to a third device in the positioning system. Upon reception of the second signal the second device is configured to stop extracting the localization enabling information and/or calculating the direction, to send a stop message together with identification information of the first device to the third device, to stop sending any data of the first device to the third device and release computing and storage resources allocated to the first device.

Upon reception of the first signal, the second device extracts the localization enabling information. Optionally, the second device calculates at least a direction of said first signal from the localization enabling information. In another option, the second device may additionally calculate a distance between the first and the second device using the first signal and the localization enabling information. Either the extracted localization enabling information or the calculated direction and/or distance are sent to the third device, in each case together with identification information, ID, of the first device. By means of the second signal the second device is informed that the first device has stopped moving. Consequently, upon reception of the second signal the second device stops extracting the localization enabling information and optionally stops calculating at least the direction of the first signal. Instead the second device sends a stop message together with ID information of the first device to the third device and subsequently refrains from sending any data of the first device to the third device. The second device then releases computing and storage resources which have been allocated to the first device previously.

Propagation of redundant localization enabling information of the first device is prohibited when the first device is stationary. Computing and storage resources in the second device can be saved.

In state of the art implementations the second device has to provide entries in memory for each first device containing at least the following information: ID, MAC address and the extracted localization enabling information. Said information is regularly updated upon reception of the first signal. Knowing that the first device is stationary, processing identical localization enabling information is avoided. This saves power and memory space.

In a development the second device comprises a second RF transceiver, and a second device processing unit. The second device RF transceiver implements reception according to a short range radio standard. The second device RF transceiver is configured to receive the first and the second signal and therefrom provide a data packet comprising the localization enabling information and a flag bit, which is indicative of the first device's movement. The second device processing unit is configured to provide the stop message based on a value of the flag bit.

The second device RF transceiver implements for example the BLE, e.g. BLE 5.1, standard. It may receive the first and the second signal and reconstruct the data packet sent by the first device. In case of BLE, especially BLE 5.1, the data packet comprises amongst others the PDU and the CTE, representing the localization enabling information. The PDU further comprises the flag bit. The second device processing unit decodes the second signal, detects a value of its flag bit, and accordingly provides the stop message which is then sent to the third device in the positioning system.

In an implementation where BLE is used in the positioning system as the short range radio standard, the second device may also be referred to as an anchor point. The anchor point decodes each first and second signal, and respectively detects the value of the flag bit. In case the flag bit indicates that the first device or tag which is identified in the first signal has stopped moving, the anchor point down prioritizes said tag and only keeps record data related to this tag in a secondary storage. In the contrary case, in which the first signal is received and the anchor points determines that the tag is still moving, based on CTE information, an angle of arrival, AOA, may be calculated and stored together with the tag's ID in an active storage location. Furthermore, the calculated angle is sent to the third device.

In an embodiment a third device in a positioning system is defined. The third device is configured to receive from a second device in the positioning system at least calculated directions or extracted localization enabling information together with identification information of a first device in the positioning system to which the directions or the location enabling information is accorded and to determine therefrom a position of the first device. The third device is further configured to receive from the second device a stop message together with identification information of the first device, to determine from the stop message that the first device identified by the identification information is stationary, to store a previously calculated position of the identified first device and to release computing and storage resources allocated to the identified first device.

The third device regularly determines the position of the first device using information received from the second device containing localization enabling information or calculated directions. As soon as the third device receives the stop message, it determines that the identified first device as indicated in the stop message is stationary stores the previously calculated position of said first device and releases computing and storage resources allocated to said first device.

Computing and storage resources in the third device can thus be saved.

The third device may also be referred to as a positioning engine. As known to those skilled in the art a positioning engine is run for example as a software program installed on a computer which is part of the positioning system. Usually, the positioning engine is run in the backend of the positioning system. It may as well be run on the second device.

In one embodiment a positioning system comprises at least one first device as defined above and at least one second device as defined above.

By using the first and second device as defined above, computing resources in the second device are saved, because sending of redundant localization enabling information from the first device to the second device is prohibited in the case in which the first device is stationary.

In real life implementations a positioning system will have numerous first devices, or tags, which simultaneously transmit localization enabling information to the second device, or anchor point. By suppressing sending of localization enabling information by tags that are no longer moving, energy consumption in tags and compute resources in anchor points is saved.

In a development the positioning system may also comprise a third device as defined above.

The positioning system may determine an absolute or a relative position of the first device.

Units defined with respect to the first and second device may be implemented in hardware or in software. These units are functional units which are not necessarily realized in separate components.

In one embodiment a method comprises the following steps continuously checking, by a first device in a positioning system, whether it is moving or stationary, periodically sending, by the first device, a first signal to a second device in the positioning system as long as the first device is moving, the first signal comprising at least localization enabling information,
when detecting, by the first device that it is stationary, sending by the first device a second signal to the second device, the second signal indicating that the first device is stationary, and stopping, by the first device, sending the first signal.

The first device checks continuously, or regularly, or periodically, for instance with a frequency of 50 Hz, whether it is moving or stationary. As long as the first device is moving it periodically sends the first signal comprising localization enabling information to the second device. As soon as the first device detects that it is stationary, it sends the second signal which indicates that it is stationary to the second device and subsequently stops sending the first signal.

By means of the proposed method computing and storage resources related to the first device can be saved in the second device as soon as the first device is stationary. Also, in the first device computing resources can be saved by suppressing sending the first signal. By this, a robust system performance for many first devices to be tracked can be achieved.

The notion first signal and second signal therein does not reflect a relationship in time, rather it is used to differentiate the two signals.

In a development the method further comprises the steps receiving, by the second device, the first signal from the first device, therefrom extracting, by the second device, the localization enabling information and optionally calculating at least a direction of said first signal using the localization enabling information and sending, by the second device, the extracted localization enabling information or at least the calculated direction together with identification information of the first device to a third device in the positioning system,
receiving, by the second device, the second signal from the first device, stopping, by the second device, extracting the localization enabling information and optionally calculating the direction, sending, by the second device, a stop message together with identification information of the first device to the third device, stopping, by the second device, sending any data of the first device to the third device, and releasing, by the second device, computing and storage resources related to the first device.

In a development the method further comprise the steps receiving, by the third device, from the second device localization enabling information or calculated directions together with identification information of the first device to which the localization enabling information and the directions are accorded and therefrom determining, by the third device, a position of the first device,
receiving, by the third device, from the second device a stop message together with identification information of the first device, determining, by the third device, from the stop message that the first device identified by the identification information is stationary, storing, by the third device, a previously calculated position of the identified first device and releasing, by the third device, computing and storage resources allocated to the identified first device.

In a development the detecting, by the first device, that it is stationary further comprises checking, by the first device, whether it has been stationary for a predetermined amount of time and then sending, by the first device, the second signal to the second device.

By waiting the predetermined amount of time before sending the second signal which stops propagation of the localization enabling information, the method is rendered even more efficient. The predetermined amount of time may be a time window the duration of which is agreed on between first and second device or which is pre-configured in the first device. During said predetermined amount of time the first device rechecks whether it is moving or stationary.

In a development the sending, by the first device, the first signal to the second device in the positioning system and the sending, by the first device, the second signal to the second device each respectively comprises providing at least one data packet comprising localization enabling information and a flag bit, setting the flag bit according to the first device's movement, and providing respectively the first signal and the second signal from the at least one data packet, the first signal and the second signal each conforming to a short range radio standard, e.g. Bluetooth, Bluetooth Low Energy, BLE, Ultra-Wideband, UWB, Wireless LAN, WLAN, respectively.

In other words, for respectively sending the first and the second signal the localization enabling information is embedded together with the flag bit in the data packet, e.g. a PDU, which data packet is subsequently converted according to the employed short range radio standard into the first or second signal, respectively.

In a development the receiving, by the second device, the first signal from the first device, and the receiving, by the second device, the second signal from the first device, each respectively comprises extracting the at least one data packet from the first or second signal and decoding the flag bit.

Upon reception of the first or second signal, the second device converts, in particular down-converts, according to the employed short range radio standard the received first or second signal to obtain the data packet with amongst others the flag bit. Decoding the flag bit enables the second device to determine whether the received signal is the first signal providing the location enabling information or the second signal signifying that the first device is stationary and the first signal will no longer be sent by the first device as long as it not moving.

The text below explains the proposed first device, second device, third device, positioning system and method in detail using exemplary embodiments with reference to the drawings. Components and elements that are functionally identical or have an identical effect bear identical reference numbers. Insofar as parts or components correspond to one another in their function, a description of them will not be repeated in each of the following figures. Therein,
Figure 1 shows an exemplary embodiment of a first device as proposed,
Figure 2 shows an exemplary embodiment of a second device as proposed,
Figure 3 shows an exemplary embodiment of a third device as proposed,
Figure 4 shows an exemplary embodiment of a positioning system as proposed,
Figure 5 shows an exemplary flowchart of a method as proposed,
Figure 6 shows a exemplary embodiments of data packets as used in the proposed devices and method, and
Figure 7 shows an exemplary overview of the system and method as proposed.

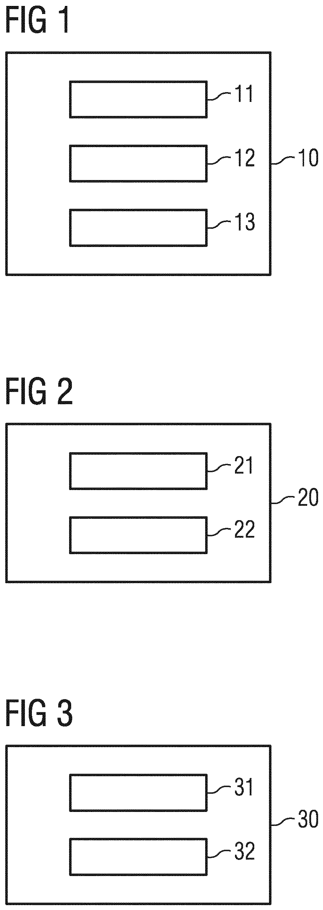

Figure 1 shows an exemplary embodiment of a first device as proposed. The first device 10 is part of a positioning system. The first device 10 comprises a sensor 11, a first device processing unit 12, and a first device radio frequency, RF, transceiver 13. The sensor 11 is configured to detect a movement of the first device 10 and accordingly provide movement information. The first device processing unit 12 is configured to provide at least one data packet comprising localization enabling information and a flag bit.

Therein the flag bit is indicative of the first device's movement detected by the sensor 11. The first device radio RF transceiver 13 implements transmission according to a short range radio standard, and is configured to receive the at least one data packet from the first device processing unit 22 and therefrom provide a first or a second signal. The first signal comprises at least localization enabling information, whereas the second signal indicates that the first device 10 is stationary and will stop sending the first signal.

The first device 10 may be implemented e.g. as a mobile device having UWB or Bluetooth, specifically as a UWB or Bluetooth tag, thereby realizing UWB positioning, e.g. as specified in IEEE 802.15.4, especially IEEE 802.15.4 a/z, or Bluetooth positioning, e.g. as specified in the BLE 5.1 standard.

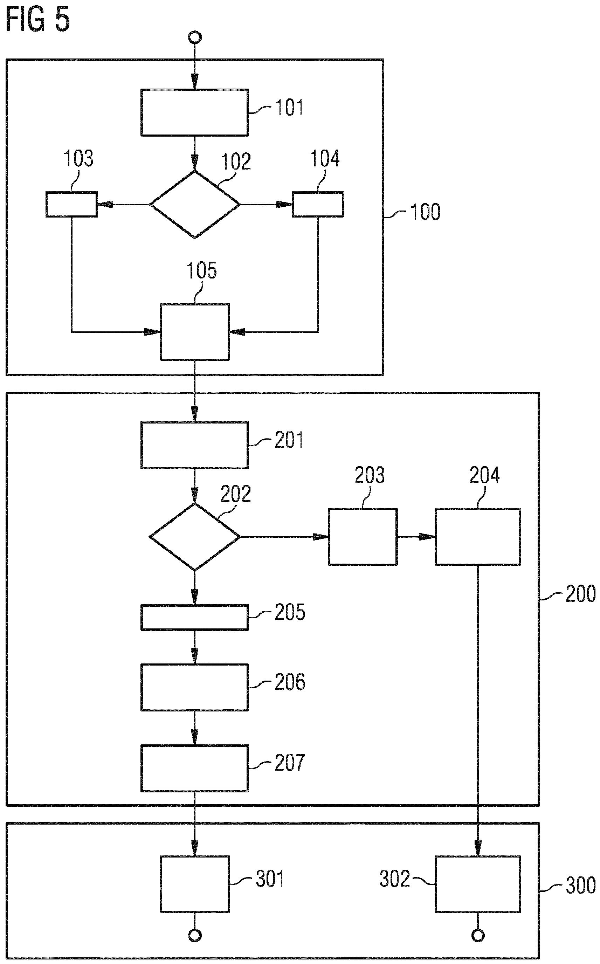

Functioning of the first device will explained below with reference to Figure 5.

Figure 2 shows an exemplary embodiment of a second device as proposed. The second device 20 is also part of the positioning system. The second device 20 comprises a second device RF transceiver 21 implementing reception according to the short range radio standard and a second device processing unit 22. The second device RF transceiver 21 is configured to receive the first and the second signal from the first device and therefrom provide the data packet comprising the
localization enabling information and the flag bit, which flag bit is indicative of the first device's movement. The second device processing unit 22 is configured to detect a value of the flag bit and to accordingly provide a stop message which is sent to a third device in case the second signal has been received.

The second device 20 may be implemented e.g. as a Bluetooth anchor point or a UWB reader in correspondence with the implementation of the first device.

The second device 20 may have a processor and storage means for realizing the functionality of the second device processing unit 22 described herein.

Functioning of the second device will explained below with reference to Figure 5.

Figure 3 shows an exemplary embodiment of a third device as proposed. The third device 30 is also part of the positioning system. The third device 30 has a third device processing unit 31 and a storage component 32. The processing unit 31 and the storage component 32 in conjunction implement the following tasks: obtain from a second device in the positioning system, e.g. the second device 20 described above, localization enabling information or at least calculated directions together with identification information of a first device in the positioning system to which the directions are accorded, e.g. the first device 10 described above, and to determine a position of the first device from the localization enabling information or the direction; receive from the second device 20 the stop message together with identification information of the first device 10, determine from the stop message that the first device 10 identified by the identification information is stationary, store a previously calculated position of the identified first device 10 and release computing and storage resources allocated to the identified first device.

The third device 30 may be implemented as a positioning engine, i.e. a software component, on separate hardware, e.g. a computer, which is connected via a wired or wireless network to the second device, or as a software component reusing processing resources of the second device.

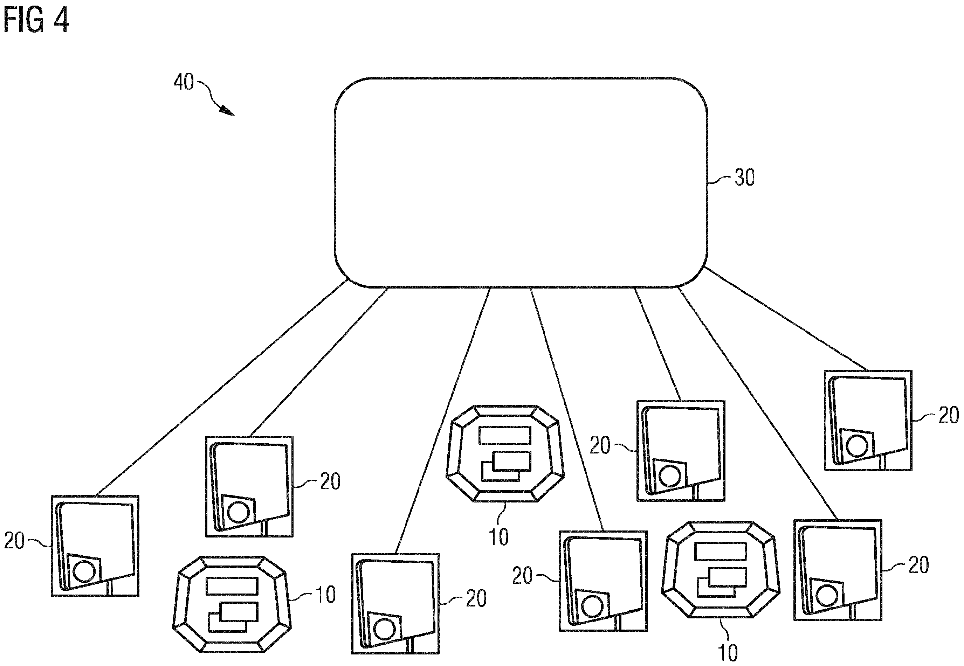

Figure 4 shows an exemplary embodiment of a positioning system as proposed. The positioning system 40 has various first devices 10 and numerous second devices 20. Each of the first devices 10 coincides with the first device described above. Each of the second devices 20 coincides with the second device described above. Communication amongst first devices 10 and second devices 20, especially exchange of the first and the second signals, is implemented by using a short range radio standard, for example, Bluetooth, UWB, Wi-Fi or the like.

As long as a first device 10 in the system 40 is moving, as detected by its sensor, the device 10 periodically sends the first signal having localization enabling information. As soon as one of the first devices 10 detects that it is stationary, it sends out the second signal and stops sending the first signal during the period in which it is stationary. First and second signals are received or detected by at least one of the second devices 20. Depending on the value of the flag bit, the second device 20 decodes the first or the second signal. Localization enabling information provided with the first signal is computed in the second device 20. Upon detection of the second signal, the second device 20 learns that the first device 10 identified in the second signal is stationary and subsequently releases computing and storage resources allocated to the identified first device 10.

Optionally the positioning system 40 may also have a third device 30. The third device 30 is in connection with each of the second devices 20. The third device 30 receives from at least one second device 20 localization enabling information or at least calculated directions, or angles together with identification information of a first device 10 to which the localization enabling information or the directions are accorded and determines therefrom a position of said first device 10. When the third device 30 receives a stop message from any second device 20, it determines that the first device 10 identified in the stop message is stationary, it stores a previously calculated position of the identified first device 10 and subsequently releases computing and storage resources allocated to the identified first device 10.

By means of the proposed first, second and third devices, 10, 20, 30, as well as the positioning system 40 described above, robust and accurate position estimation of moving first devices 10 is realized and waste of resources for stationary first devices 10 is prohibited.

Figure 5 shows an exemplary flowchart of a method as proposed. The flowchart has method steps 100 as performed by the device 10 which is described above. In a first step 101 the first device collects data from the sensor, for instance an IMU sensor, to detect whether it is moving or stationary in a second step 102. Optionally, it is additionally checked in step 102 whether the stationary or non-moving status of the first device already persists for a predefined amount of time. In case it is detected that the first device is stationary and optionally has been stationary for the predetermined amount of time, the flag bit is set as shown in step 103. In case it is determined that the first device is moving, the flag bit is not set as shown in step 104. In both cases, as shown in step 105, the first or second signal is provided and sent. In case of usage of BLE5.1, an advertisement message is additionally equipped with the flag bit and sent out as the first signal or the second signal, wherein the first signal differs from the second signal in the value of the flag bit.

The flowchart also shows method steps 200 which are performed by the second device 20 as described above. In the step 201, the second device receives the first or the second signal via wireless communication according to the short range radio standard. The received signal is decoded and in step 202 it is determined whether the flag bit is set or not. In case the flag bit is set, which signifies that the first device which is identified in the received second signal is stationary, data related to the identified first device, like previously calculated directions, is stored and subsequently said data is down prioritized in step 203. Furthermore, a stop message together with identification information of the identified first device is sent to the third device as shown in step 204. In the opposite case in which the flag bit is not set, signifying that the identified first device 10 is still moving, the localization enabling information provided with the first signal is extracted and directions, or angles, or a distance are calculated with respect to the first device in step 205. The calculated data is kept in active storage in step 206. Optionally, said calculated data is sent to the third device as depicted in step 207.

The flowchart also shows optional method steps 300 which are performed by the third device 30 as described above. In step 301, the third device receives from the second device a calculated direction, or calculated angles, or a calculated distance for the identified first device and therefrom determines a position of the first device. In case of receipt of the stop message from the second device which also contains an ID of the first device as of step 302, the third device determines that the identified first device is stationary, and therefore stores a previously calculated position of the first device until new data for said first device arrives. Subsequently, computing and active storage resources for the identified first device are released.

In the depicted example the flag bit is set in case the first device is stationary. In an alternative implementation the flag bit may be set in case the first device is moving and remain unset when the first device is stationary.

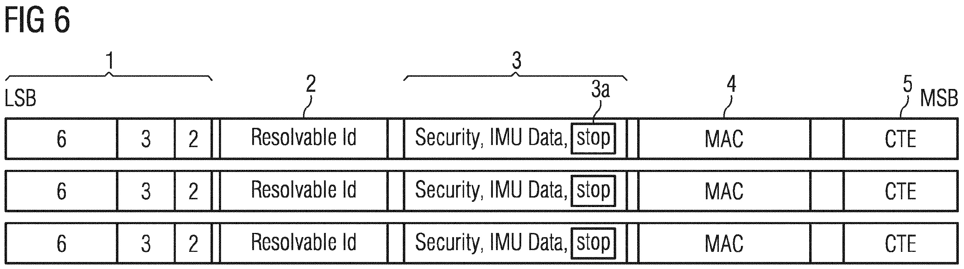

Figure 6 shows exemplary embodiments of data packets as used in the devices and method as proposed. As an example, the structure of BLE5.1 direction finding packets or advertisement packets is depicted. From top to bottom three different direction finding packets are shown, each of which represents one data packet as defined above. Starting from the left side with the least significant bit, LSB, to the right side with the most significant bit, MSB, each packet has a preamble 1, a resolvable ID 2, corresponding to the identification information of the first device, a packet data unit 3, a medium access control, MAC, address 4 and a constant tone extension, CTE, 5. The PDU 3 may carry different data of the first device, for instance the IMU data, and it additionally has the flag bit 3a. At least one of these three packets is sent out by the first device on one advertisement channel as known to those skilled in the art.

In an optional implementation all three packets depicted in Figure 6 are transmitted using three different advertisement channels as defined in the BLE5.1 specification, for example.

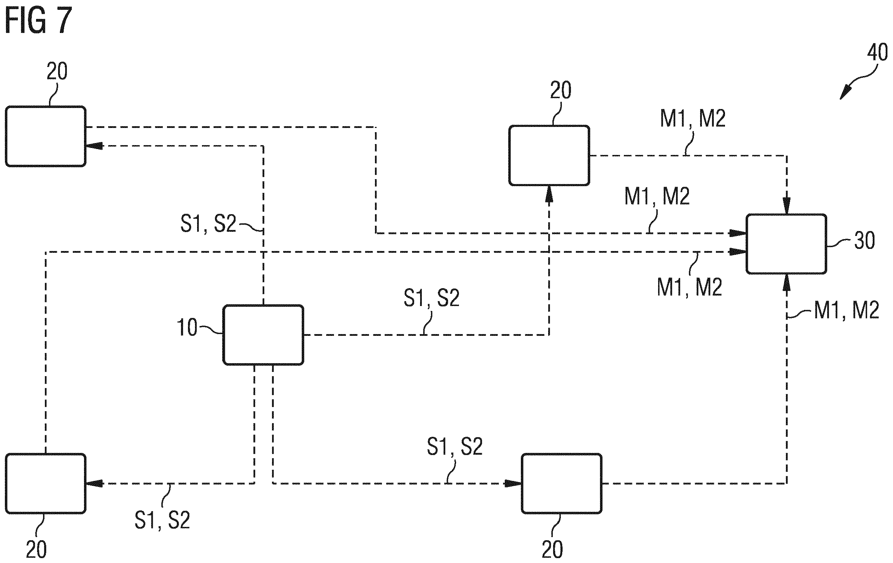

Figure 7 shows an exemplary overview of the system 40 and method as proposed. The depicted example relies on the usage of BLE direction finding, i.e. positioning using BLE. The first device 10 sends the first or the second signal S1, S2, each being structured as depicted in Figure 6, for example, depending on whether or not its sensor has detected that it is stationary. The first signal S1 comprises at least localization enabling information. The first signal S1 further comprises the flag bit. The second signal S2 also comprises the flag bit which is set inverse to the flag bit of the first signal S1. The first or second signal S1, S2 is detected by various second devices 20 of the positioning system. Each of the second devices 20 which detects the first or second signal S1, S2 of the first device 10 decodes the received signal and forwards either extracted localization enabling information or calculated directions/angles to the third device 30 in case a first signal S1 was received with the first message M1, or the stop message M2. The first message M1 and the stop message M2 each also convey the ID of the first device 10. Other data, like data from an IMU sensor and/or a calculated angle, may also be included in the first message M1 and/or the stop message M2.

It will be appreciated that the invention is not limited to the disclosed embodiments and to what has been particularly shown and described hereinabove. Rather, features recited in separate dependent claims or in the description may advantageously be combined. Furthermore, the scope of the invention includes those variations and modifications which will be apparent to those skilled in the art and fall within the scope of the appended claims. The term "comprising" used in the claims or in the description does not exclude other elements or steps of a corresponding feature or procedure. In case that the terms "a" or "an" are used in conjunction with features, they do not exclude a plurality of such features. Moreover, any reference signs in the claims should not be construed as limiting the scope.

### Reference list

- 1: preamble
- 2: ID
- 3: PDU
- 4: MAC address
- 5: CTE
- 10, 20, 30: device
- 40: system
- 11: sensor
- 12, 22, 31: processing unit
- 13, 21: RF transceiver
- 32: storage component
- 100, 200, 300: method steps
- 101, 102, 103, 104, 105: method step
- 201, 202, 203, 204, 205, 206, 207: method step
- 301, 302: method step
- S1, S2: signal
- M1, M2: message

## Claims

1. A first device (10) in a positioning system (40),
wherein
the first device (10) is configured to detect whether the first device (10) is moving or stationary,
the first device (10) is configured to periodically send a first signal to a second device (20) in the positioning system (40) as long as the first device (10) is not stationary, the first signal comprising at least a localization enabling information, and
wherein when detecting that the first device (10) is stationary the first device (10) is further configured to send a second signal to the second device (20), the second signal indicating that the first device (10) is stationary, and to stop sending the first signal.

2. The first device (10) according to claim 1,
wherein the first device (10) comprises
- a sensor (11) which is configured to detect a movement of the first device (10) and accordingly provide a movement information,
- a first device processing unit (12) configured to provide at least one data packet comprising the localization enabling information and a flag bit, wherein the flag bit is indicative of the first device's movement detected by the sensor, and
- a first device radio frequency, RF, transceiver (13) implementing transmission according to a short range radio standard, the first device RF transceiver (13) being configured to receive the at least one data packet from the first device processing unit (12) and therefrom provide the first or the second signal.

3. The first device (10) according to claim 2,
wherein the first device processing unit (12) is configured to set the flag bit according to the movement information provided by the sensor.

4. The first device (10) according to claim 2 or 3,
wherein the sensor (11) comprises an inertial measurement unit, IMU, in particular the sensor comprises at least one of the following: a gyro sensor, or an accelerometer, or a compass or a magnetometer.

5. A second device (20) in a positioning system (40), wherein
the second device (20) is configured to receive at least one first and at least one second signal from a first device (10) in the positioning system (40), each first signal comprising at least a localization enabling information, each second signal indicating that the first device is stationary,
the second device (20) being further configured to upon reception of each first signal extract the localization enabling information and optionally calculate at least a direction of said first signal from the localization enabling information and send the extracted localization information or send at least the calculated direction together with an identification information of the first device to a third device (30) in the positioning system (40), and
upon reception of the second signal the second device (20) is configured to stop extracting the localization enabling information and calculating the direction, to send a stop message together with the identification information of the first device (10) to the third device (30), to stop sending any data of the first device (10) to the third device (30) and to release computing and storage resources allocated to the first device (10).

6. The second device (20) according to claim 5,
wherein the second device (20) comprises
a second device radio frequency, RF, transceiver (21) implementing reception according to a short range radio standard, the second device RF transceiver (21) being configured to receive the first and the second signal and therefrom provide a data packet comprising the localization enabling information and a flag bit, wherein the flag bit is indicative of the first device's movement, and
a second device processing unit (22) configured to provide the stop message based on a value of the flag bit.

7. A third device (30) in a positioning system (40),
wherein the third device (30) is configured to receive from a second device (20) in the positioning system (40) a localization enabling information or at least calculated directions in each case together with an identification information of a first device (10) in the positioning system (40) to which the localization enabling information or the directions are accorded and to determine therefrom a position of the first device (10),
receive from the second device (20) a stop message together with the identification information of the first device (10), determine from the stop message that the first device (10) identified by the identification information is stationary, to store a previously calculated position of the identified first device (10) and release computing and storage resources allocated to the identified first device (10).

8. A positioning system (40) comprising
at least one first device (10) according to any of claims 1 to 4, and
at least one second device (20) according to claim 5 or 6.

9. The system (40) according to claim 8,
wherein the system (40) further comprises a third device (30) according to claim 7.

10. A Method comprising the following steps:
continuously checking, by a first device in a positioning system, whether it is moving or stationary,
periodically sending, by the first device, a first signal (S1) to a second device in the positioning system as long as the first device is moving, the first signal comprising at least a localization enabling information,
when detecting, by the first device, that it is stationary, sending, by the first device, a second signal (S2) to the second device, the second signal indicating that the first device is stationary, and stopping, by the first device,
sending the first signal.

11. Method according to claim 10 further comprising the following steps:
receiving, by the second device, the first signal (S1) from the first device, therefrom extracting, by the second device,
the localization enabling information and optionally calculating at least a direction of said first signal using the localization enabling information and sending, by the second device, the extracted localization enabling information or at least the calculated direction together with an identification information of the first device to a third device in the positioning system,
receiving, by the second device, the second signal (S2) from the first device, stopping, by the second device, extracting the localization enabling information and optionally calculating the direction, sending, by the second device, a stop message (M2) together with the identification information of the first device to the third device, stopping, by the second device, sending any data of the first device to the third device, and releasing, by the second device, computing and storage resources related to the first device.

12. Method according to claim 11 further comprising the following steps:
receiving, by the third device, from the second device the localization enabling information or the calculated directions together with the identification information of the first device to which the localization enabling information and the directions are accorded and therefrom determining, by the third device, a position of the first device,
receiving, by the third device, from the second device a stop message (M2) together with the identification information of the first device, determining, by the third device, from the stop message (M2) that the first device identified by the identification information is stationary, storing, by the third device, a previously calculated position of the identified first device and releasing, by the third device, any computing and storage resources allocated to the identified first device.

13. Method according to any of claims 10 to 12,
wherein the detecting, by the first device, that it is stationary further comprises checking, by the first device, whether it has been stationary for a predetermined amount of time and then sending, by the first device, the second signal to the second device.

14. Method according to any of claims 10 to 13,
wherein the sending, by the first device, the first signal (S1) to the second device in the positioning system and the sending, by the first device, the second signal (S2) to the second device each respectively comprises providing at least one data packet comprising the localization enabling information and a flag bit, setting the flag bit according to the first device's movement, and providing respectively the first signal (S1) and the second signal (S2) using the at least one data packet, the first signal (S1) and the second signal (S2) each conforming to a short range radio standard, e.g. Bluetooth, Bluetooth Low Energy, BLE, Ultra-Wideband, UWB, Wireless LAN, WLAN, respectively.

15. Method according to claim 14,
wherein the receiving, by the second device, the first signal (S1) from the first device, and the receiving, by the second device, the second signal (S2) from the first device, each respectively comprises extracting the at least one data packet from the first or second signal (S1, S2).
